# EUROPÄISCHE PATENTSCHRIFT

(11) **EP 1 067 042 B1**
(45) Veröffentlichungstag und Bekanntmachung des Hinweises auf die Patenterteilung: **25.09.2002**
(21) Anmeldenummer: 99810609.0
(22) Anmeldetag: 08.07.1999
(51) Int. Cl.: B62H 1/02

(54) **Zweirad mit Hinterrad-Stützvorrichting sowie Hinterrad-Stützvorrichtung**
Stand for a rear wheel and two wheeler having the same
Support de roue arrière pour un véhicule à deux roues et deux-roues avec le support

(43) Veröffentlichungstag der Anmeldung: 10.01.2001
(73) Patentinhaber: GEBRÜDER PLETSCHER AG, CH-8460 Marthalen (CH)
(72) Erfinder: Weissenberger, Heinz, 8248 Uhwiesen (CH)
(74) Vertreter: Patentanwälte Schaad, Balass, Menzl & Partner AG

(56) Entgegenhaltungen:
- EP-A- 0 409 352
- DE-A- 4 111 274
- DE-U- 29 513 869

## Beschreibung

Die Erfindung betrifft ein Zweirad, insbesondere ein Fahrrad, mit Hinterrad-Stützvorrichtung gemäss dem Oberbegriff des Anspruches 1 sowie eine Hinterrad-Stützvorrichtung für ein Zweirad gemäss dem Oberbegriff des Anspruches 8.

Eine derartige Hinterrad-Stützvorrichtung ist aus DE-U-29 513 869 bekannt. Sie weist einen Stützkopf mit einer darin verschwenkbar gelagerten Stütze auf, die zum Abstützen des Zweirades im Stand in eine Stützposition geschwenkt und für den fahrenden Gebrauch über ein Gelenk gegen die Kraft einer Feder zum Rahmen hin in eine Fahrposition wegklappbar ist. Am Stützkopf ist eine bridenartige Schelle angeordnet, die eine meist aus einem Rohrprofil gebildete Rahmenstrebe im Bereich des Hinterrades des Zweirades umgreift und z.B. mittels Schrauben so zusammengezogen ist, dass sich eine kraftschlüssige Verbindung zwischen Schelle und Rahmenstrebe ergibt. Häufig lockert sich diese Verbindung nach einiger Zeit des Gebrauchs etwas und die auf die Stützvorrichtung wirkenden Kräfte bewirken, dass sich die Stützvorrichtung mit samt der Schelle um die zylindrische Rahmenstrebe und deren Längsachse als Angelpunkt zu verdrehen beginnt.

Die gleichen Nachteile weist auch die aus der DE-A-41 11 274, Fig. 5, bekannte Hinterrad-Stützvorrichtung auf, deren Stützkopf mit einem die Rahmenstrebe zylindrischer Aussenform bridenartig umschliessenden, mittels Schrauben zusammenziehbaren Befestigungsteil in Form eines einstückigen Stanzteiles versehen ist.

Um diesem Problem zu begegnen, ist beispielsweise in DE-U-94 19 135 vorgeschlagen worden, die Hinterrad-Stützvorrichtung über ein zusätzliches Befestigungselement mit einer zweiten Rahmenstrebe im Bereich des Hinterrades, beispielsweise der Sattelstrebe, zu verbinden. Diese Art der Befestigung benötigt aber eine Stützvorrichtung mit einer grösseren Anzahl Einzelteile. Die Hinterrad-Stützvorrichtung muss ausserdem so ausgestaltet sein, dass sie abhängig vom Zweiradmodel für die unterschiedlichen Winkel und die unterschiedlichen Distanzen der beiden Rahmenstreben zueinander verwendbar ist. Dies verteuert die Herstellung der Hinterrad-Stützvorrichtung und erschwert ihre Montage.

Aufgabe der vorliegenden Erfindung ist es ein Zweirad mit einer verdrehsicher an einer Rahmenstrebe zylindrischer Aussenform montierbaren Hinterrad-Stützvorrichtung sowie eine entsprechende Hinterrad-Stützvorrichtung zur Verfügung zu stellen, wobei die Hinterrad-Stützvorrichtung kostengünstig herstellbar und einfach montierbar ist.

Diese Aufgabe wird erfüllt durch ein Zweirad gemäss den Merkmalen des Anspruches 1 und eine Hinterrad-Stützvorrichtung gemäss den Merkmalen des Anspruches 8.

Durch die Verbindung zwischen einem an einer Rahmenstrebe im Hinterradbereich eines Zweirades unlösbar fixierten Befestigungselement und einem auf dieses Befestigungselement aufbringbaren Befestigungsteil eines Stützkopfes einer Hinterrad-Stützvorrichtung ist die Hinterrad-Stützvorrichtung gegen ein Verdrehen um die Rahmenstrebe gesichert. Durch das an der Rahmenstrebe unlösbar fixierte Befestigungselement werden die auf die Hinterrad-Stützvorrichtung wirkenden Kräfte aufgenommen, so dass diese Kräfte nur indirekt von der Stützvorrichtung an die Rahmenstrebe übertragen werden.

Werden das Befestigungselement an der Rahmenstrebe und das Befestigungsteil des Stützkopfes gegengleich als Ausnehmung und als vorspringendes Teil ausgebildet, bei dem zur Herstellung der Verbindung zwischen beiden das vorspringende Teil in die Ausnehmung passgenau eingreift und sich so eine formschlüssige Verbindung ergibt, erfolgt über diese Fügung eine günstige Kraftübertragung von der Hinterrad-Stützvorrichtung auf das Befestigungselement und weiter au die Rahmenstrebe.

Die Ausbildung des Befestigungsteils als integrierter Bestandteil des Stützkopfes senkt die Herstellungskosten und vereinfacht die Montage der Hinterrad-Stützvorrichtung.

Besonders vorteilhaft ist es das Befestigungselement unlösbar mit der Rahmenstrebe zu verbinden, da so eine Bewegung des Befestigungselementes gegenüber der Rahmenstrebe ausgeschlossen ist. Eine Lötverbindung zwischen Rahmenstrebe und Befestigungselement bietet die nötige Stabilität und ist gleichzeitig hochbelastbar auf Zug-, Druck- und Schlagbeanspruchung.

Weitere bevorzugte Ausführungsformen sind Gegenstand weiterer abhängiger Ansprüche.

Anhand der Figuren 1 bis 4 wird im Folgenden die Erfindung beispielhaft erläutert. Es zeigen rein schematisch:
- Fig. 1: in Seitenansicht einen Ausschnitt eines Rahmens eines Zweirades im Bereich von dessen Hinterrad mit einer erfindungsgemässen Hinterrad-Stützvorrichtung, die an einer Rahmenstrebe des Zweirades befestigt ist;
- Fig. 2: die Hinterrad-Stützvorrichtung aus Fig. 1 in einer Ansicht in Richtung des Pfeiles A;
- Fig. 3: eine Explosionsansicht der Hinterrad-Stützvorrichtung aus Fig. 1; und
- Fig. 4: eine Explosionsansicht der Hinterrad-Stützvorrichtung aus Fig. 1 in einer Ansicht analog zur Ansicht in Fig. 2.

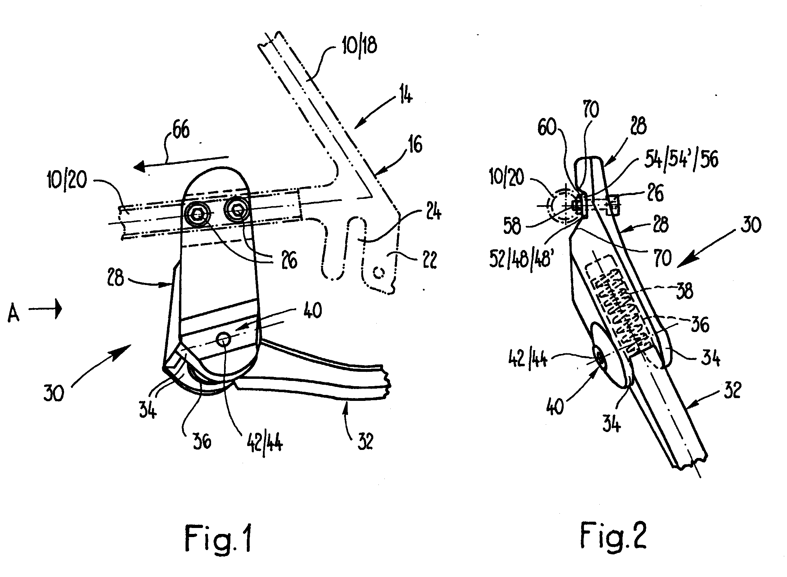

Fig. 1 zeigt einen Teil des Rahmens eines im übrigen nicht dargestellten Zweirades. Dieser Rahmen weist im Bereich 14 seines Hinterrades zwei miteinander verbundener Rahmenstreben 10 auf, die mit gestrichelten Linien dargestellt sind. Im Bereich der Verbindung 16 der beiden Rahmenstreben 10, von denen eine eine Sattelstrebe 18 und eine eine Kettenstrebe 20 ist, ist ein Flansch 22 mit einer Aussparung 24 zur Aufnahme einer Achse eines Hinterrades angeordnet.

An der Kettenstrebe 20 ist mittels zweier Schrauben 26 der Stützkopf 28 einer Hinterrad-Stützvorrichtung 30 befestigt. Wie dies auch aus den Fig. 1 bis 4 ersichtlich ist, weist die Hinterrad-Stützvorrichtung 30 neben dem Stützkopf 28 eine verschwenkbar im Stützkopf 28 gelagerte Stütze 32 auf, die in bekannter Weise gegen die Kraft einer in einem durch Seitenwände 34 des Stützkopfes 28 gebildeten Hohlraum 36 untergebrachten Feder 38 in eine Stützposition und in eine Fahrposition (vgl. Fig. 1) gebracht werden kann. Als Gelenk 40, um welches die Stütze 32 verschwenkbar ist, dient ein Zylinderstift 42, der gelagert in einander gegenüberliegenden Öffnungen 44 der Seitenwände 34 eine Achsöffnung 46 der Stütze 32 durchgreift.

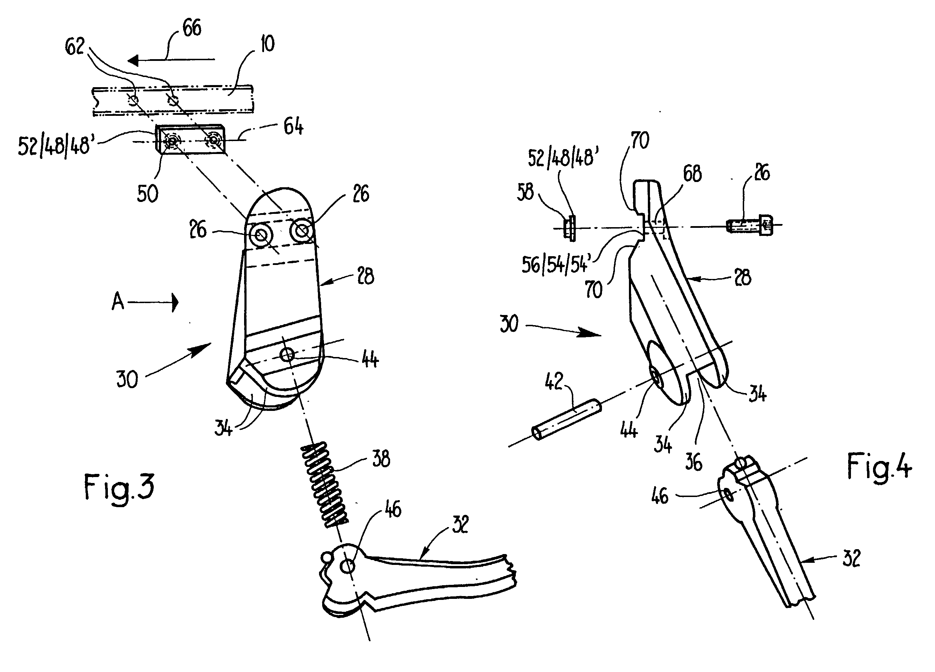

Für die Befestigung der Hinterrad-Stützvorrichtung 30 an der Rahmenstrebe 10 des Zweirades ist in dem gezeigten Beispiel ein Befestigungselement 52 in Form einer rechteckigen Platte 48 vorgesehen, die an der Rahmenstrebe 10 befestigt ist. Die Platte 48 ist mit zwei Gewindeöffnungen 50 versehen, die jeweils zusammen mit einer Gewindebuchse 58 ein durchgehendes Gewinde bilden. Die durch die Gewindebuchsen 58 erhaltene grössere Zahl Gewindegänge führt zu günstigeren Kräfteverhältnissen bei Belastung. Die Platte 48 ist durch eine Lötverbindung an der Rahmenstrebe 10 fixiert, wobei die Gewindebuchsen 58 in entsprechende Bohrungen 62 in der Rahmenstrebe 10 eingreifen, wie dies in den Fig. 2 und 3 gezeigt ist. Die Platte 48 ist dabei mit ihrer Längsachse 64 in Längsrichtung 66 der Rahmenstrebe 10 ausgerichtet und steht von der Rahmenstrebe 10 vor. In einem integrierten Befestigungsteil 56 des Stützkopf 28 der Hinterrad-Stützvorrichtung 30 ist eine Nut 54 vorgesehen, die gegengleich zur Platte 48 ausgebildet ist. Das Befestigungsteil 56 weist in der Nut 54 zwei bei passgenauem Zusammenbringen von Nut 54 und vorspringender Platte 48 mit den Gewindeöffnungen 50 der Platte 48 fluchtende Aufnahmeöffnungen 68 zur Aufnahme von Schrauben 26 auf. Im gezeigten Beispiel weist die Nut 54 abgeschrägte Flanken 70 auf, die einen Teil des Umfanges der Rahmenstrebe 10 umfangen.

Zum Einen sichern die Schrauben 26, die quer zu den angreifenden Kräften die Verbindung zwischen Hinterrad-Stützvorrichtung 30 und Rahmenstrebe 10 bilden, die Hinterrad-Stützvorrichtung 30 vor einer Verdrehung um die Rahmenstrebe 10. Zum andern wirken auch die Nut 54 im Stützkopf 28 und die in die Nut 54 eingreifende, vorspringende Platte 48 an der Rahmenstrebe 10 durch Blockierung der Drehbewegung einer Verdrehung entgegen.

Statt einem Zusammenwirken von Befestigungselement 52 und Befestigungsteil 56 in Form von Nut 54 und Feder 48, wie es hier gezeigt ist, ist auch ein Zusammenwirken in Art einer Schwalbenschwanzverbindung oder ähnlichem denkbar. Auch kann eine Ausnehmung 54' statt am Stützkopf 28 an dem an der Rahmenstrebe 10 fixierten Befestigungselement 52 ausgestaltet sein und ein vorspringender Teil 48' am Stützkopf 28. Statt der Gewindeöffnungen 50 mit den Gewindebuchsen 58 können auch nur Gewindebohrungen durch die Platte 48 getrieben und/oder evtl. fluchtend dazu auch in die Rahmenstrebe 10 getrieben sein. Die Verbindung zwischen Rahmenstrebe 10 und Hinterrad-Stützvorrichtung 30 kann aber auch allein durch das Zusammenwirken, z.B. durch eine Schwalbenschwanzverbindung, des unlösbar mit der Rahmenstrebe 10 verbundenen Befestigungselementes 52 mit dem am Stützkopf 28 angeordneten Befestigungsteil 56 realisiert sein. Das Befestigungsteil 56 kann auch anstatt, wie gezeigt, in den Stützkopf 28 integriert zu sein, separat an diesem angeordnet und auf beliebige Weise mit ihm verbunden sein. Umgekehrt kann auch das Befestigungselement 52 integrierter Bestandteil des Rahmenstrebe 10 sein.

## Patentansprüche

1. Zweirad (12), insbesondere Fahrrad, mit einer Hinterrad-Stützvorrichtung (30), welche einen Stützkopf (28) mit einem lösbar mit einer im Bereich (14) des Hinterrades gelegenen Rahmenstrebe (10) des Zweirades (12) verbindbaren Befestigungsteil (56) und eine verschwenkbar im Stützkopf (28) gelagerte Stütze (32) aufweist, **dadurch gekennzeichnet, dass** an der Rahmenstrebe (10) ein Befestigungselement (52) unlösbar fixiert ist, und der Befestigungsteil (56) des Stützkopfes (28) mit dem Befestigungselement (52) an der Rahmenstrebe (10) zusammengebracht und mit diesem lösbar verbunden ist.

2. Zweirad mit Hinterrad-Stützvorrichtung nach Anspruch 1, **dadurch gekennzeichnet, dass** die lösbare Verbindung zwischen Befestigungsteil (56) des Stützkopfes (28) und Befestigungselement (52) an der Rahmenstrebe (10) eine Schraubverbindung ist.

3. Zweirad mit Hinterrad-Stützvorrichtung nach Anspruch 2, **dadurch gekennzeichnet, dass** das Befestigungselement (52) an der Rahmenstrebe (10) ein Gewinde aufweist.

4. Zweirad mit Hinterrad-Stützvorrichtung nach einem der Ansprüche 1 bis 3, **dadurch gekennzeichnet, dass** das Befestigungsteil (56) am Stützkopf (28) oder das Befestigungselement (52) an der Rahmenstrebe (10) als vorspringendes Teil (48') ausgestaltet ist und das Befestigungselement (52) an der Rahmenstrebe (10) bzw. das Befestigungsteil (56) am Stützkopf (28) eine zu dem vorspringenden Teil (48') gegengleich ausgebildeten Ausnehmung (54') aufweist, in welche das vorspringende Teil (48') eingreift.

5. Zweirad mit Hinterrad-Stützvorrichtung nach einem der Ansprüche 1 bis 4, **dadurch gekennzeichnet, dass** das Befestigungsteil (56) integrierter Bestandteil des Stützkopfes (28) ist.

6. Zweirad mit Hinterrad-Stützvorrichtung nach einem der Ansprüche 1 bis 5, **dadurch gekennzeichnet, dass** das Befestigungselement (52) durch Löten mit der Rahmenstrebe (10) verbunden ist.

7. Zweirad mit Hinterrad-Stützvorrichtung nach einem der Ansprüche 1 bis 6, **dadurch gekennzeichnet, dass** das Befestigungselement (52) eine langgestreckte Form aufweist, deren Längsachse (64) sich in Längsrichtung (66) der Rahmenstrebe (10) erstreckt.

8. Hinterrad-Stützvorrichtung für ein Zweirad, insbesondere ein Fahrrad, welche einen Stützkopf (28) mit einem Befestigungsteil (56) und eine verschwenkbar im Stützkopf (28) gelagerte Stütze (32) aufweist, wobei das Befestigungsteil (56) dazu bestimmt ist, lösbar mit einer im Bereich (14) des Hinterrades des Zweirades (12) gelegenen Rahmenstrebe (10) verbunden zu werden, **dadurch gekennzeichnet, dass** das Befestigungsteil (56) derart ausgebildet ist, dass es mit einem an der Rahmenstrebe (10) unlösbar fixierten Befestigungselement (52) zusammenbringbar und mit diesem lösbar verbindbar ist.

9. Hinterrad-Stützvorrichtung nach Anspruch 8, **dadurch gekennzeichnet, dass** sie gemäss einem der Ansprüche 2 bis 7 ausgebildet ist.

## Claims

1. Two-wheeled vehicle (12), in particular bicycle, with a rear-wheel support device (30) which comprises a support head (28) with a fastening part (56), which can be connected detachably to a frame strut (10) of the two-wheeled vehicle (12) located in the region (14) of the rear wheel, and a support (32) mounted pivotably in the support head (28), **characterized in that** a fastening element (52) is fixed non-detachably to the frame strut (10), and the fastening part (56) of the support head (28) is brought together with the fastening element (52) on the frame strut (10) and connected detachably to this element.

2. Two-wheeled vehicle with a rear-wheel support device according to Claim 1, **characterized in that** the detachable connection between the fastening part (56) of the support head (28) and the fastening element (52) on the frame strut (10) is a screw connection.

3. Two-wheeled vehicle with a rear-wheel support device according to Claim 2, **characterized in that** the fastening element (52) on the frame strut (10) comprises a thread.

4. Two-wheeled vehicle with a rear-wheel support device according to one of Claims 1 to 3, **characterized in that** the fastening part (56) on the support head (28) or the fastening element (52) on the frame strut (10) is in the form of a projecting part (48'), and the fastening element (52) on the frame strut (10) or the fastening part (56) on the support head (28) comprises a recess (54') designed so as to mate with the projecting part (48'), in which recess the projecting part (48') engages.

5. Two-wheeled vehicle with a rear-wheel support device according to one of Claims 1 to 4, **characterized in that** the fastening part (56) is integrated into the support head (28).

6. Two-wheeled vehicle with a rear-wheel support device according to one of Claims 1 to 5, **characterized in that** the fastening element (52) is connected undetachably to the frame strut (10) in particular by soldering.

7. Two-wheeled vehicle with a rear-wheel support device according to one of Claims 1 to 6, **characterized in that** the fastening element (52) has an elongate shape, the longitudinal axis (64) of which extends in the longitudinal direction (66) of the frame strut (10).

8. Rear-wheel support device for a two-wheeled vehicle, in particular a bicycle, which comprises a support head (28) with a fastening part (56) and a support (32) mounted pivotably in the support head (28), the fastening part (56) being intended to be connected detachably to a frame strut (10) located in the region (14) of the rear wheel of the two-wheeled vehicle (12), **characterized in that** the fastening part (56) is of such a design that it can be brought together with a fastening element (52) fixed non-detachably to the frame strut (10) and connected detachably to this element.

9. Rear-wheel support device according to Claim 8, **characterized in that** it is designed according to one of Claims 2 to 7.

## Revendications

1. Deux-roues (12), en particulier bicyclette, avec dispositif d'appui pour roue arrière (30), lequel présente une tête d'appui (28) avec une pièce de fixation (56) pouvant être reliée de manière amovible à une entretoise de cadre (10) située à proximité (14) de la roue arrière du deux-roues (12) et un appui (32) monté sur paliers pouvant pivoter dans la tête d'appui (28), **caractérisé en ce qu'**un élément de fixation (52) est fixé de manière inamovible à l'entretoise de cadre (10) et **en ce que** la pièce de fixation (56) de la tête d'appui (28) est ramenée avec l'élément de fixation (52) à l'entretoise de cadre (10) et est reliée de manière amovible à celle-ci.

2. Deux-roues avec dispositif d'appui pour roue arrière suivant la revendication 1, **caractérisé en ce que** la liaison amovible entre la pièce de fixation (56) de la tête d'appui (28) et l'élément de fixation (52) à l'entretoise de cadre (10) est un vissage.

3. Deux-roues avec dispositif d'appui pour roue arrière suivant la revendication 2, **caractérisé en ce que** l'élément de fixation (52) à l'entretoise de cadre (10) présente un filetage.

4. Deux-roues avec dispositif d'appui pour roue arrière suivant l'une des revendications 1 à 3, **caractérisé en ce que** la pièce de fixation (56) à la tête d'appui (28) ou l'élément de fixation (52) à l'entretoise de cadre (10) est conçu comme pièce en saillie (48') et l'élément de fixation (52) à l'entretoise de cadre (10) ou la pièce de fixation (56) à la tête d'appui (28) présente un renfoncement (54') construit comme pendant à la pièce en saillie (48'), dans lequel fait prise la pièce en saillie (48').

5. Deux-roues avec dispositif d'appui pour roue arrière suivant l'une des revendications 1 à 4, **caractérisé en ce que** la pièce de fixation (56) fait partie intégrante de la tête d'appui (28).

6. Deux-roues avec dispositif d'appui pour roue arrière suivant l'une des revendications 1 à 5, **caractérisé en ce que** l'élément de fixation (52) est relié de manière inamovible à l'entretoise de cadre (10), en particulier par brasure.

7. Deux-roues avec dispositif d'appui pour roue arrière suivant l'une des revendications 1 à 6, **caractérisé en ce que** l'élément de fixation (52) a une forme allongée, dont l'axe longitudinal (64) s'étend dans le sens longitudinal (66) de l'entretoise de cadre (10).

8. Dispositif d'appui pour roue arrière pour un deux-roues, en particulier une bicyclette, qui présente une tête d'appui (28) avec une pièce de fixation (56) et un appui (32) monté sur paliers de manière permettant le pivotement dans la tête d'appui (28), la pièce de fixation (56) étant destinée à être reliée de manière amovible à une entretoise de cadre (10) située à proximité (14) de la roue arrière du deux-roues (12), **caractérisé en ce que** la pièce de fixation (56) est conçue de façon à pouvoir être assemblée à un élément de fixation (52) fixé de manière inamovible à l'entretoise de cadre (10) et être reliée de manière amovible à celui-ci.

9. Dispositif d'appui pour roue arrière suivant la revendication 8, **caractérisé en ce qu'**il est conçu suivant l'une des revendications 2 à 7.
